Europäisches Patentamt

European Patent Office

Office européen des brevets

(19)

(11) **EP 0 559 858 B1**

(12) **EUROPÄISCHE PATENTSCHRIFT**

(45) Veröffentlichungstag und Bekanntmachung des Hinweises auf die Patenterteilung:
**12.02.1997 Patentblatt 1997/07**

(21) Anmeldenummer: **92919158.3**

(22) Anmeldetag: **16.09.1992**

(51) Int Cl.⁶: **C05F 3/00**

(86) Internationale Anmeldenummer:
**PCT/EP92/02122**

(87) Internationale Veröffentlichungsnummer:
**WO 93/06063 (01.04.1993 Gazette 1993/09)**

(54) **VERFAHREN UND APPARATUR ZUR AUFBEREITUNG VON TIEREXKREMENTEN, GÜLLE UND JAUCHE**

METHOD AND INSTALLATION FOR PROCESSING ANIMAL EXCREMENT AND LIQUID MANURE

PROCEDE ET INSTALLATION DE TRAITEMENT D'EXCREMENTS D'ANIMAUX ET DE PURIN

(84) Benannte Vertragsstaaten:
**AT BE CH DE DK ES FR GB IE IT LI NL PT**

(30) Priorität: **20.09.1991 DE 4131296**

(43) Veröffentlichungstag der Anmeldung:
**15.09.1993 Patentblatt 1993/37**

(73) Patentinhaber: **HALFTER, Georg**
**D-79639 Grenzach-Wyhlen (DE)**

(72) Erfinder: **HALFTER, Georg**
**D-79639 Grenzach-Wyhlen (DE)**

(74) Vertreter: **Termin, Erich**
**Untere Lochmatt 10**
**79737 Herrischried (DE)**

(56) Entgegenhaltungen:
**EP-A- 0 486 932          DD-A- 290 592**

- **DATABASE WPI Section Ch, Week 9107, Derwent Publications Ltd., London, GB; Class D05, AN 91-049163 & NL,A,8 901 581**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren und eine Apparatur zur Aufbereitung von Tierexkrementen, Gülle und Jauche - im weiteren unter dem Begriff Flüssigstoffe zusammengefasst - zwecks Bindung und Überführung der in den Flüssigstoffen enthaltenen Stickstoffverbindungen,hauptsächlich von Ammoniak, in von den Pflanzen leicht aufnehmbare Düngemittel, sowie zwecks Reduzierung der in den Flüssigstoffen enthaltenen unangenehmen Geruchstoffe

Desweiteren betrifft das erfinderische Verfahren gleichzeitig eine Problemlösung zur Aufbereitung und verbesserung der Stallabluft.

Im Zuge der verstärkten Nutztierhaltung fallen vermehrt Flüssigstoffe und Stallabluft an, die die Umwelt zum Teil erheblich schädigen können und die Produktionskosten in der landwirtschaftlichen Tierhaltung überproportional ansteigen lassen.

Die Flüssigstoffe werden üblicherweise in Behältern ( zum Beispiel Jauche- und Güllegruben), die aus den verschiedensten Materialien (z.Beisp. Stahl, Kunststoff, Holz, Beton) - heute hauptsächlich betonierte Behälter aus Ortsbeton, bestehen können, gesammelt und gelagert.

Dazu zählen auch Behälter von Biogasanlagen, die entgaste Gülle enthalten.

Nach dem aktuellen Stand der Nutztierhaltung wird die Stallabluft fast ausschliesslich an die Umwelt abgegeben und verursacht somit Emissionen.

Falls jedoch die Stallabluft gereinigt wird, ohne den Ammoniak- und gegebenenfalls Kohlendioxid- bzw. Methangehalt zu nutzen, so verursacht die einzusetzende Technik und der Betrieb Kosten und erbringt für den Betreiber solcher Anlagen erhöhte Produktionskosten.

Periodisch werden die Flüssigstoffbehälter, meist in Abhängigkeit von der Witterung und dem Volumen des Behälters entleert.

Dies erfolgt, entweder mittels Tankfahrzeugen oder auf Fahrzeugen situierten Tankbehältern, oder direkt mittels Pumpen und Rohrleitungen, auch Pipelines genannt, mit welchen die Flüssigstoffe hauptsächlich auf landwirtschaftliche Nutzflächen wie Acker- und Grünland verteilt werden.

Das Verteilen der Flüssigstoffe erfolgt häufig mittels zentralen Verteilern, zum Beisp. Prallteller, Pendelrohrverteiler, Regnersystemen oder dezentralen Verteilergestängen, bei denen die auszubringenden Stoffe mit der atmosphärischen Luft in Berührung kommen und diese mit Geruchsstoffen und Ammoniak verunreinigen.

Das Verbringen der Flüssigstoffe auf bewirtschaftete Agrarflächen erfolgt seit alters her, weil die Flüssigstoffe wertvolle Pflanzennährstoffe in Form von Stickstoff Phosphor- und Kaliumverbindungen enthalten.

Der somit in den Flüssigstoffen enthaltene Naturdünger, insbesondere in Form von Stickstoffverbindungen, ist, volkswirtschaftlich gesehen, ein Wertstoff der ansonsten auf chemischem Wege hergestellt werden müßte.

Synthetische Stickstoffdüngemittel werden ausschliesslich auf der Rohstoffbasis des Stickstoffgehalts der atmosphärischen Luft hergestellt.

Da die Luft nur zu ca 80% aus Stickstoff besteht muß der Sauerstoffanteil von 20% abgetrennt werden.

Dies geschieht mittels dem sogenannten Lindeverfahren, überwiegend aber, durch Verbrennen des Sauerstoffs zu Kohlenmonooxid oder Kohlendioxid, da der Sauerstoffbedarf als Nebenprodukt des Lindeverfahrens begrenzt ist.

Zur Bindung bzw. Verbrennung des Sauerstoffanteils der Luft werden, um 1 kg Stickstoff herzustellen, mindestens 1 Kg Kohlenstoff in Form von Erdgas, Erdöl bzw. Kohle benötigt. Falls keine Koppelprodukte zur Verwertung von Kohlenmonooxid hergestellt werden, fällt in grossen Mengen Kohlensäure an,die an die Atmosphäre abgegeben wird, die Berichten zufolge für den sogenannten Treibhauseffekt verantwortlich sind.

Umso wichtiger ist es deshalb den Stickstoffgehalt der Tierexkremente in den Flüssigstoffen und in der Stallabluft, nicht nur nicht zu vernichten, sondern, wie es auch die Aufgabe der Erfindung ist, in eine solche Form zu überführen, dass der Stickstoff als Naturdüngemittel weitestgehend genutzt wird.

Es sollte in diesem Zusammenhang bedacht werden, dass in verschiedenen Weltgegenden die natürlichen Düngemittel aus Tier- und sogar Humanexkrementen aus ökonomischen Gründen oft die einzigen zur Verfügung stehenden Düngemittel sind.

Bei der beschriebenen konventionellen Art der unaufbereiteten Flüssigstoffausbringung gehen 80 bis 90% des Stickstoffgehalts verloren.

Der Grossteil entweicht als nichtgebundener Stickstoff, wie zum Beispiel Ammoniak, in die Atmosphäre. Teils sofort während der Ausbringung der Flüssigstoffe im Sprühverfahren, teils, in Abhängigkeit von den Klimaverhältnissen und der Bodenbeschaffenheit, in relativ kurzer Zeit nach dem Ausbringen der Flüssigstoffe. Das Gleiche trifft für die besonders übel riechenden Verbindungen vom Typ der Skatole und des Mercaptantyps zu, die in den Flüssigstoffen enthalten sind.

Letzte sind chemisch wenig reaktiv und können deshalb nicht nach einem Einfachverfahren chemisch gebunden und abgetrennt werden.

Ein weiteres Umweltproblem, welches mit der Tierzuchthaltung zusammenhängt, ist die Ausscheidung von Methangas, insbesondere bei Rindern, wie allgemein bei Wiederkäuern.

Methangas besitzt ein 30-sigfach höheres Ozongefährdungspotential als Kohlensäure. Da Methangas ohnehin die Umwelt belastet, insbesondere aus Fermentationsprozessen der Mülldeponierung bei nichtgenutzter Deponiegasverwertung und als herkömmlich bekanntes Sumpfgas aus Reisanbaugebieten und Sumpffeldern, sowie als Faulgas aus der Ablagerung von Schlamm in wenig belüfteten und wasserunbeweglichen Inlandsgewässern, ist es umso wichtiger, zumindest Teilproblemlösungen zu realisieren.

Aufgabe der Erfindung ist es deshalb alle zitierten Probleme im Zusammenhang mit der Tierhaltung, im Idealfall in einem kombinierten Verfahren zu lösen.

Aus der geschilderten Sachlage ist es unverantwortlich, dass Gülle-, Tierexkrementen- und Stallabluftproblem im Sinne einer Vernichtung der wertvollen Stoffe und ohne jeglichen Nutzeffekt lösen zu wollen.

Selbst eine Vernichtung der belästigenden Stoffe ist nicht umweltfreundlich, denn auch bei chemischen und biologischen Umwandlungsprozessen gibt es kein perpetuum mobile.

Von grösster Bedeutung ist der fachlich richtige Umgang mit der Entsorgung der genannten Flüssigstoffe;

a) in aufbereiteter Form, und
b) dass die Ausbringung der aufbereiteten Flüssigstoffe in einer solchen Konzentration auf das bewirtschaftete Agrarland erfolgt, dass die Konzentration der gleichmässig auf den Boden ausgebrachten Flüssigstoffe, pro Flächeneinheit, im Rahmen der vegetations- und pflanzenangepassten Aufnahmefähigkeit und der biologisch-bakteriellen Abbaubarkeit im Boden liegt.

Werden die unbehandelten Flüssigstoffe auf die landwirtschaftlichen Nutzflächen in der Nähe von Wohngebieten versprüht, dann kann es zur Beeinträchtigung der Gesundheit der Bewohner kommen. In derartigen Immissionsgegenden wurde von Schleimhautentzündungen, Kopfschmerzen, Schlafstörungen und Allergien berichtet.

Verantwortlich für die Beeinträchtigung der Umwelt sind vor allem die gasförmigen und sogenannten freien, ungebundenen Gehaltstoffe der Flüssigstoffe.

Dazu gehören vor allem Ammoniak, die Geruchstoffe aus dem Abbau von Eiweisstoffen des Typs der Skatole sowie der organischen Schwefelverbindungen des Mercaptantyps.

Insbesondere wird dem freien Ammoniak ein hohes gesundheitsschädigendes und baumschädigendes Potential zugesprochen, wogegen die intensiven Geruchsstoffe eher in geringer Konzentration in den Flüssigstoffen vorliegen.

Dren Geruchsintensität, insbesondere die der Mercaptane ist jedoch ausserordentlich stark ausgeprägt.

Selbst im ppm und sogar 1000-fach geringerem Konzentrationsbereich ist der Geruch noch wahrnehmbar.

Abgesehen von den gesundheitsrelevanten Auswirkungen der Immissionen der Flüssigstoffe, wird immer'öfter berichtet, dass die Atmosphäre und deren höhere Schichten durch die gasförmigen Inhaltstoffe der Flüssigstoffe und der Stallabluft geschädigt werden sollen.

Das gleiche gilt in viel gravierender Form für das Methan das bei der Rindviehhaltung entsteht.

Offensichtlich wird die Ozonschicht geschädigt. Jene Ozonschicht, die in etwa 20 - 50 km Höhe um die Erde, wie ein Schutzschild wirkt, das die gefährliche Ultraviolettstrahlung aus dem Sonnenlicht absorbiert.

Erwähnt werden muß, dass das Methanproblem in der Form als Emissionsgas, aus der Stallabluft kommend, bisher völlig vernachlässigt wurde.

Wenn man jedoch bedenkt dass es weltweit Milliarden von Wiederkäuern gibt, wobei zum Beispiel jedes Rind durchschnittlich täglich mehr als 200 1 Methan ausscheidet, so ist es leicht kalkulierbar, dass die sich summierende Methanmenge, die in Betracht kommt, ganz erheblich ist.

Eine Totallösung dieses Problems ist kaum vorstellbar. Eine Minderung der anfallenden Methangasvolumina wäre schon ein ganz erheblicher Erfolg, falls dies mittels einem einfachen und realisierbaren Verfahren möglich ist.

Aufgabe der Erfindung ist es deshalb ein Verfahren und eine Vorrichtung zu finden, dass die Flüssigstoffe von den flüchtigen und nicht chemisch gebundenen Verbindungen, insbesondere den Stickstoffverbindungen und Geruchstoffen befreit,beziehungsweise deren Gehalt in den Flüssigstoffen bedeutsam reduziert und zwar in der Art, dass diese Stoffe vorzugsweise gebunden werden und die Stickstoffverbindungen, insbesondere Ammoniak in Stickstoffdünger überführt werden, die von den Pflanzen gut aufgenommen werden und der Prozessgasüberschuss thermisch entsorgt wird.

Weiterhin ist es eine Aufgabe der Erfindung die Emissionen über die Stallabluft inbezug auf Geruchsstoffe und den Methangehalt, wenn es sich um Rinder bzw. Wiederkäuerhaltung handelt, zu verringern sowie generell das freie Ammoniak aus der Stallabluft zu nutzen, wenn möglich, gleichzeitig in einunddemselben Verfahren mit der Flüssigstoffaufbereitung.

Überraschenderweise gelang die Lösung der Aufgabe durch ein Verfahren zur Aufbereitung von Tierexkrementen, Gülle und Jauche - Flüssigstoffe genannt - zum Zwecke der Nutzbarmachung des im Flüssigstoff enthaltenen Ammoniaks als chemisch gebundenes, nichtflüchtiges Pflanzendüngmittel, sowie der thermischen Entsorgung der chemisch nicht einfach reagiblen, umweltbelästigenden Inhaltstoffe der Flüssigstoffe, beziehungsweise aus dem Verfahrensablauf resultierender Reststoffe wie Ammoniakreste, Methangas oder gasförmige Geruchstoffe, indem das in den Flüssigstoffen nichtgebundene und/oder gelöste Ammoniak durch Zusatz von Kohlendioxid und Gips zu den Flüssigstoffen in ein nichtflüchtiges, von den Pflanzen gut aufnehmbares Stickstoffdüngemittel überführt wird und die Flüssigstoffe in einem Strippingverfahren, durch Einleiten von Sauerstoff, vorzugsweise in Form von Luft, von den Geruchstoffen, Restammoniak, Methan und sonstigen flüchtig Stoffen entlastet werden, die bei Austritt aus der Apparatur, thermisch-katalytisch oder mit Hilfe von brennbarem Gas verbrannt werden.

Gelöst wurde die Aufgabe der Erfindung ferner durch eine Apparatur, wie sie Gegenstand des unabhängigen Anspruchs 5 und der darauf bezogenen abhängigen Ansprüche 6-8 ist.

Die Gipszugabe und die Kohlensäurezufuhr in den Mischzylinder 4 kann auch gleichzeitig erfolgen.

Falls erforderlich, können die Flüssigstoffe von Feststoffen getrennt werden durch eine Dickstofftrennanlage 50 als Vorschaltaggregat, begin end mit dem Zulauf der Rohflüssigstoffe 21 in den Vorschaltsieb 42 -raum mit dem Reiberkolben 41 der das Sieb 42 stets säubert, und die Dickstoffe austrägt,endend mit dem Überlaufgefäss 40 mit dem Auslaufstutzen zur Ableitung der dünnflüssigen Flüssigstoffe in das Folgeverfahren.

Die erfinderische Apparatur wird auch als mobile Anlage eingesetzt.

Die Flüssigstoffaufbereitung unter Zusatz von aufgeschlämmtem Gips erfolgt am besten durch die Anwendung von gefälltem Gips, wie er zum Beispiel bei der Rauchgasentschwefelung anfällt. Der Feststoffgehalt an Gips in der Aufschlämmung sollte zwischen 5 und 25% liegen, wobei aus Gründen der Reaktionskinetik höhere Gipskonzentrationen vorteilhafter sind. Am praktikabelsten ist jedoch eine Gipskonzentration in der Aufschlämmung von zwischen 10 bis 20%, wegen der leichteren Dispergierbarkeit von Gips in Wasser und der störungsfreien Zudosierbarkeit der Gipsaufschlämmung in die Aufbereitungsvorrichtung.

Von Bedeutung ist ebenfalls der Gipseindosierungsort in die Aufbereitungsvorrichtung. Dieser ist so angeordnet, dass die aufzubereitenden Flüssigstoffe auf einen hohen Überschuß an Gips treffen, bezugnehmend zum Äquivalentbedarf der chemischen Umsetzung des Ammoniaks zu Ammoniumsulfat. Dies ist besonders wichtig, da das Verfahren bei Raumtemperatur abläuft und deshalb keine Energiezufuhr erforderlich ist und was das Verfahren einmal mehr als umweltfreundlich ausweist. Die Eindosierung der Gipsaufschlämmung erfolgt deshalb bevorzugt am Ansaugstutzen der Flüssigstoffpumpe 1. Dies hat ausserdem den Vorteil, dass in der Exzenterschneckenpumpe 1, gleichzeitig eine intensive Durchmischung der reagierenden Stoffe stattfindet und da der Pumpenkörper aus weitgehend agressionsbeständigem und abrassivresistentem Elastomermaterial besteht, wird ein eventueller Materialschwachpunkt ausgeschaltet.

Es sind schon viele Anstrengungen zur Lösung der erfinderischen Aufgabe unternommen worden.

So wird in der DE-PS 37 12 788 ein Verfahren zur Einstellung aes Kalziumbedarfs bei der Düngung mittels Gülle beschrieben, wobei der Gülle, nur bei Kalziummangel im Boden, Dolomit als Kalziumdonator zugesetzt wird.

Da Dolomit neutral bis eher basisch reagiert und praktisch wasserunlöslich ist, ist deren Reaktionsaktivität dem ebenfalls basisch reagierenden Ammoniak gegenüber nur unerheblich.

Berücksichtigt man die in diesem Verfahren zitierte Vorrichtung, dann ist ein erheblicher mess-analytischer Aufwand zur kontrollierten Durchführung des Verfahrens erforderlich.

In Müll und Abfall 20(1988) 469-72, wird ein Verfahren zur Eliminierung von Ammonium aus Deponiesickerwasser durch chemische Fällung als Magnesium-Ammoniumphosphat beschrieben, das auch bei der Ammoniumfällung aus Gülle angewendet werden könnte.

Abgesehen davon dass eine Totalausfällung des Ammoniaks garnicht erforderlich ist, ist das Verfahren apparativ zu aufwendig, um auch im mittleren landwirtschaftlichen Betrieb eingesetzt werden zu können.

Der Landwirt müßte darüberhinaus sich einige Kenntnisse in Chemie und Verfahrenstechnik aneignen, um eine rationelle Prozessführung zu gewährleisten.

Zum Stand der Technik ist des weiteren noch folgendes bekannt. Die EP-A- 486 932 beschreibt ein Verfahren zur Herstellung von festem Dünger, durch eine Behandlung von Kot, Mist, Gülle und Klärschlamm mit einem Gemisch aus Polymeren und Säuren dem anschließend Gips zugesetzt und erhitzt wird.

Die DD-A-290 592 beschreibt ein Verfahren zur Absorption von Ammoniak aus Abluft insbesondere Stallabluft, in dem saure ammoniumbisulfithaltige Gülle als Absorptionsmittel zur $NH_3$-Absorption verwendet wird.

Die vollstufige Aufbereitung der Flüssigstoffe und der Stallabluft nach dem erfinderischen Verfahren basiert auf der Bindung des gelösten Ammoniaks, bzw. nur leicht chemisch gebundenem Ammoniak und anderen basisch reagierenden Inhaltstoffen in den Flüssigstoffen, mittels Gips zu Ammoniumsulfat,nach folgender chemischer Formel

$$CaSO_4 + 2\,NH_3 + CO_2 + H_2O \rightarrow CaCO_3 + (NH_4)_2SO_4$$

Das $CaSO_4$ wird als Dispersion in den Prozess eingeführt. Von Vorteil kann deshalb Gips aus der industriellen Rauchgasentschwefelung als billiger Rohstoff eingesetzt werden. Insofern ist das erfinderische Verfahren in doppelter Hinsicht umweltentlastend, da einmal Ammoniak gebunden wird und andererseits ein Umweltabfallprodukt wieder nutzbar gemacht wird.

Als Reaktionsmedium wird,neben $CaSO_4$, ein mässiger Strom an Kohlendioxid benötigt. Normalerweise reicht der Kohlendioxidgehalt der Stallraumluft aus, der in der Regel bei ca 4% liegt. Falls eine derartige Abluft nicht verfügbar ist wird Kohlensäure aus Stahlflaschen eingesetzt.

Das $CaSO_4$ wird ohne Dispersionshilfsmittel, vorteilhaft als sogenannte Aufschlämmung in den Prozess eingebracht. Vorteilhaft ist ein Gipsgehalt in der Aufschlämmung, (Suspension) von 15% , bezogen auf 100 Gewichtsteile der wässrigen Masse.

Im Gebrauchsrahmen liegen jedoch Gipskonzentrationen in der Aufschlämmung zwischen 10 und 30%.

Die Reaktion läuft schon bei einer Temperatur von ca 30°C ab. Wird diese Temperatur nicht unwesentlich unterschritten, kann dieses Manko durch eine Erhöhung des Gipsgehaltes in der Gipsaufschlämmung ausgeglichen werden. Es sind jedoch keine speziellen Temperierungsmassnahmen erforderlich.

Sollte das vorliegende Verfahren jedoch grosstechnisch genutzt werden, wo es im Rahmen der Wirtschaftlichkeit auf einen schnellen Prozessablauf ankommt, dann könnte die Energie der Abgasverbrennung aus diesem Verfahren, bei der Abfackelung der zu verbrennenden Restgase und des erforderlichen Stützgases, hierzu genutzt werden.

Bei der zitierten Erhöhung des Gipsgehaltes in der Gipsaufschlämmung und überhaupt der konzentrierten Dosierung von Gips in den Flüssigstoff,ist ebenfalls der Gipszudosierungspunkt in der Aufbereitungsapparatur von besonderer Bedeutung.

Dieser ist so angeordnet, dass die aufzubereitenden Flüssigstoffe auf einen hohen Überschuß an Gips treffen, bezugnehmend auf den Äquivalentbedarf der chemischen Umsetzung von Ammoniak zu Ammonsulfat, gemäss der zitierten chemischen Formel. Vorzugsweise liegt der Gipszudosierungspunkt unmittelbar am Ansaugteil der Exzenterschneckenpumpe 1, für die Flüssigstoffe.

Dieser Zudosierungspunkt ist überdies sehr günstig, weil sofort innerhalb der Exzenterschneckenpumpe eine intensive Durschmischung der Reaktionspartner, Flüssigstoff und Gips, stattfindet. Da alternativ oberhalb der Exzenterschneckenpumpe die Kohlensäure aus der Stallabluft zugemischt wird, kann die Reaktion komplett gemäss der zitierten chemischen Formel ablaufen.

Dass die Exzenterschneckenpumpe praktisch die Funktion eines Vorreaktors einnimmt ist auch aus einem weiteren Grunde ausserordentlich wichtig.

Die Mischbereiche chemischer Verfahren sind in der Regel die grössten Materialverschleißzonen, bedingt durch Strömungsturbulenzen, Abrasion,chemische Korrosion und ähnliches. Da die Durchmischung der Reaktionspartner innerhalb der Exzenterschneckenpumpe stattfindet, deren Pumpenkörper aus weitgehend aggressionsbeständigem und abrasivresistentem Elastomermaterial besteht, ist ein potentieller Materialschwachpunkt ausgeschaltet.

Unter dem Begriff Gips ist oas Kalziumsulfat-Dihydrat oder das Kalziumsulfat-Halbhydrat zu verstehen.

Das neben dem Ammoniumsulfat als Produkt anfallende Kalziumcarbonat ist ebenfalls ein nützlicher Pflanzennährstoff.

In gefällter Form wirkt Kalziumcarbonat als Langzeitdüngemittel und neutralisiert gleichzeitig das etwas sauer reagierende Ammoniumsulfat.

Der nach der beschriebenen Fällungsreaktion von Ammoniak mittels Gips folgt gleichzeitig oder nichtsimultan die Entgasung der Flüssigstoffe und der Verbrennung der Gase aus der Entgasung.

Darüberhinaus wird das Methangas, stammend aus der Stallabluft der Rindviehhaltung verbrannt.

Da die Konzentration der brennbaren Gase, aus der Flüssigstoffentgasung, alleine eine zu geringe Konzentration an brennbaren Gasen besitzt, muß ein brennbares Gas, ein sogenanntes Stützgas die Verbrennung unterstützen.

Als Stützgase werden, Erdgas, Propan oder Butan eingesetzt. Die Verbrennung der Prozessabgase muß derart erfolgen, dass insbesondere die verbrennung der Stickstoff und Geruchstoffverbindungen sollte gewährleistet sein.

Ammoniak kann partiell verbrannt werden, wobei allerdings Stickoxide als Verbrennungsprodukte entstehen.

Im vorliegenden Falle wird die Totalverbrennung praktiziert da in einem solchen Falle auch nur ein geringerer Sauerstoffbedarf als bei der partiellen Verbrennung erforderlich ist. Beispielhaft verläuft die Verbrennung des Ammoniaks nach der chemischen Formel

$$4NH_3 + 3\,O_2 = 2\,N_2 + 6\,H_2\,O$$

Bei der zitierten Verbrennungsreaktion des Ammoniaks entstehen 302 kcal an Energie.Da im Abgasgemisch auch noch Methan mit einem noch höheren Kalorienwert verbrannt wird, ist ein erheblicher nutzbarer Energiewert vorhanden.

Diese Energie der Verbrennungsabluft kann über Wärmetauscher genutzt und zum Beispiel zur Warmwasseraufbereitung verwendet werden.

Natürlich kann die Verbrennung der Abgase auch katalytisch über temperierte Katalysatornetze oder Katalysatorfilter, ähnlich denen der Ottomotor-Abgaskatalysatoren erfolgen.

Welches der Verfahren der thermischen Entsorgung günstiger ist hängt im Einzelfall von der zu verbrennenden Menge ab.

Insofern muß auch im Einzelfall entschieden werden welchem der Verbrennungsmethoden der Prozessabgase die Präferenz eingeräumt werden soll.

Das erfinderische Verfahren wird wie in den Nachfolgenden Beispielen beschrieben durchgeführt, ist jedoch nicht auf diese Beispiele beschränkt.

Mess- und regeltechnische Geräte werden im einzelnen nicht beschrieben.

Um das erfinderische Verfahren optimal zu praktizieren, sollten einfache, handelsübliche Mess- und Regelgeräte eingesetzt werden. Zum Beispiel, zur pH-Messung, ionensensitive Elektroden zur Messung der $NH_3$- , $CO_2$- und Ca-Konzentration.

Das erfinderische Verfahren bringt folgende Vorteile. allgemeine Vorteile:

- normale Verteileinrichtungen (Prallteiler, Düsenbalken, Regnersysteme) können eingesetzt werden, dadurch Kosteneinsparungen
- hohe Flächenleistungen sind möglich
- Ausbringung bei guten Boden- und Witterungsverhältnissen möglich, dadurch geringere Boden- und Pflanzenschädigungen
- höhere Transportwürdigkeit der Gülle wegen höherem pflanzenverfügbarem N-Gehalt
- Umwandlung des für Düngezwecke nicht verwendbaren Gipses
- niedrige variable Kosten, wegen geringer Kosten für die Reaktionsstoffe

Vorteile einer mobilen Anlage, die nach dem Stapelbehälter eingesetzt wird:

- übliche Stallhaltungssysteme können beibehalten werden
- kein Transport von Gülle zu Aufbereitungszwecken (Fabrik)
- niedrige Fixkostenbelastung

Stationäre Anlage mit Verwendung der Stallabluft:

- Wert der Gülle steigt durch Anreicherung des aus der Stallabluft extrahierten N, dadurch höhere Transportwürdigkeit der Gülle (Ammoniumsulfatgehalt steigt um ca 100%)
- die Geruchsemmissionen der Stallabluft werden beseitigt, dadurch geringere Entfernungen der Stallgebäude zu Wohngebieten möglich,
- durch zentrale Erfassung der Stallabluft lassen sich ohne besonderen Aufwand Wärmerückgewinnungsanlagen installieren,
- durch die Bindung des Stickstoffs kann unter Umständen auf Güllebehälterabdeckungen verzichtet werden, (Kosteneinsparung) niedrigere variable Kosten durch Nutzung des Kohlendioxids der Stallabluft.

Die Vorteile wirken sich auch indirekt aus, weil man laufend bemüht ist die Emmissionen und Geruchsbeeinträchtigung, bei der Nutztierhaltung zu reduzieren. Einige Massnahmen sind, zum Beispiel für die übliche Geruchsminderungsmethoden bei der Gülle:

Stall:

- chemische Zusätze
- große Entfernungen zu Wohngebieten

Lagerung:

- Belüftung (unbefriedigend)
- Behälterabdeckung (Kosten)
- Chemische Güllezusätze
- Biogasherstellung (hohe Verfahrenskosten)

Ausbringung

- Eindrillgeräte (technisch aufwendig, energieaufwendig, nur in sehr geringem Umfang einsetzbar)

Verringerung der Emmissionen mit der Stallabluft:

- Spülen der Laufgänge mit Wasser
- Biowäscher mit Bakterienkulturansiedlung
- Konzentrationsänderungen

**Beispiel 1**

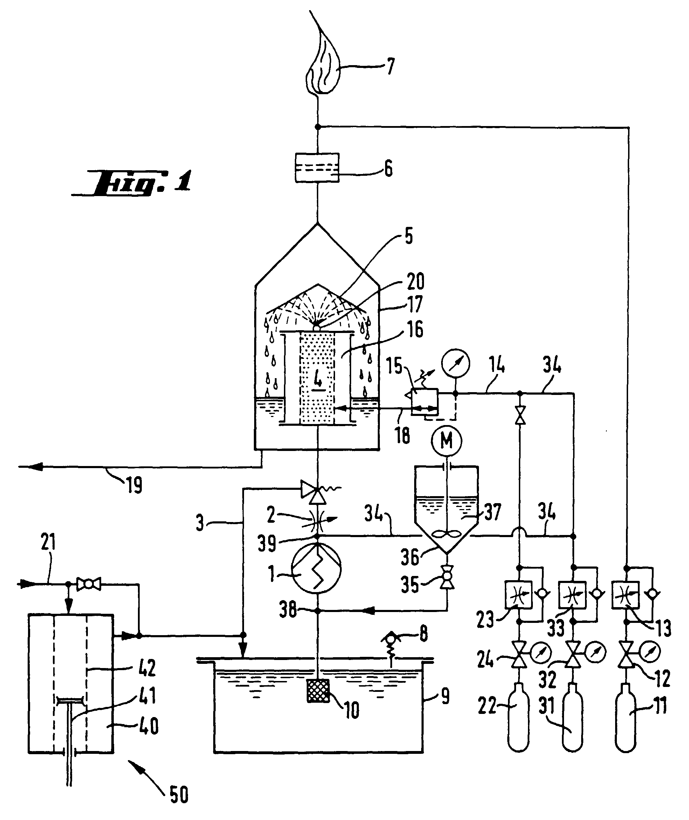

Verfahrensablauf gemäss Fig.1

Aus dem Stapelbehälter 9 wird über den Saugkopf mit selbstreinigendem Filter 10 der Flüssigstoff mittels einer Exzenterschneckenpumpe 1 über die Druck-/Mengenregelung 2 und dem Sicherheitsüberlauf 3 in den Mischzylinder 4 des Reaktors 17 gepumpt. Die Mengenregelung 2 kann evt1. entfallen, wenn die gepumpte Flüssigstoffmenge über die Drehzahl der Exzenterschneckenpumpe 1 geregelt wird. Über Zuleitung 18 wird durch den Poröskörper 16 hindurch Sauerstoff, Luft, vorzugsweise aber die Tierhalte-(Stall)- Abluft, in Form feinverteilter Bläschen in den Mischzylinder 4 gedrückt.

Der Poröskörper 16 besteht aus Keramik oder Kunstoffmaterial wie Polyäthylen,Polypropylen,Polyamid oder ähnlichen Kunststoffrohstoffen. Dabei handelt es sich um einen rohrförmigen Hohlkörper mit geschlossener Aussenwand, offener Innenwand und feinporösem bzw. kapilardurchzogenem Körpermaterial.

Durch diese Art des Materials wird die Luftzuleitung in den Mischzylinder 4 automatisch so gestaltet, dass eine Feinverteilung erfolgt, so wie sie für dieses Verfahren erwünscht ist. Andererseits erspart der Poröskörper eine ansonsten erforderliche Einleitungsdüse.

Alternativ und/oder zusätzlich kann die Sauerstoff (Luft)-Zufuhr auch direkt auf der Druckseite der Exzenterschneckenpumpe erfolgen, was den Reaktionsweg des Gemisches aus den Flüssigstoffen und dem Gipsschlamm noch verlängert.

Der Auslaufstutzen 20 des Mischzylinders 4 ist so dimensioniert, dass kein Druck im Mischzylinder entstehen kann, das heisst,dassim Effekt durch die Lufteinleitung in den Mischzylinder eine partielle Dampfdruckerniedrigung in der Reaktionsmasse erfolgt.

Dies erleichtert das Entgasen der Flussigstoffe.

Der Sauerstoff bzw. Sauerstoffgehalt in der Luft die in den Mischzylinder eingedrückt werden, verursachen eine milde oxidative Wirkung auf den Flüssigstoff, beziehungsweise bewirken eine Aktivierung bakterieller Stoffabbauprozesse.

Dadurch erfolgt partiell auch eine gewisse Desodorierung der Flüssigstoffe.

Gleichzeitig mit Beginn der Sauerstoff-(Luft)-Einleitung, wird aus dem Mischgefäss 36, über die Dosiereinrichtung 35, eine 10%-ige Gipsaufschlämmung 37 in Höhe des Exzenterpumpenansaugstutzens 38 den Flüssigstoffen zugeleitet. Die Gipsschlammdosierung erfolgt im Volumenverhältnis pro Zeiteinheit, zum Beispiel 100 1 pro Stunde.

Da das Mischgefäss 36 mit einem Rührer mit Motor M versehen ist, bleibt die Aufschlämmung stets gut fliessfähig und läuft mit der Eigenschwerkraft zur Dosierstelle.

Andererseits übt die Exzenterschneckenpumpe eine Sogwirkung aus. Um eine vollkommene Gleichmässigkeit der Gipsschlammeinleitung zu gewährleisten, ist es zweckmässig eine Kleindosierpumpe zu diesem Zwecke einzusetzen. In einem solchen Falle können die die Drehzahlen beider Pumpen, der Exzenterschneckenpumpe für die Flüssigstoffe 1 und die Gipsschlammdosierpumpe so aufeinander abgestimmt werden, dass eine wirtschaftlich optimale Nutzung der Einsatzstoffe erfolgt.

Das zur Ammoniakbindung erforderliche Kohlendioxid befindet sich in der eingeleiteten Luft, wenn Stallabluft als Luftquelle eingesetzt wird. Ist dies nicht der Fall, dann muß Kohlendioxid aus einer anderen Quelle eingesetzt werden, zum Beisp. aus einer Stahlflasche oder Tank 31, über das Ventil 32 und die Dosierregelung 33 mit den Einleitleitungen 34. Vorteilhaft ist es das Kohlendioxid im Punkte 39, oberhalb des Exzenterschneckenpumpenausgangs in das System einzuleiten. Dadurch erfolgt eine besonders intensive Durchmischung der Reaktionsmasse und die Kontaktverweilzeit wird verlängert.

Zu erwähnen ist noch eine andere Kohlensäurequelle die im Feldeinsatz von interesse ist, nämlich, die Verwertung der Auspuffgase aus Dieselaggregaten, die bis zu einem Drittel des Kohlendioxidbedarfs decken können.

Nachdem die Reaktionsmasse den Mischzylinder 4 passiert hat, verlässt der nun behandelte Flüssigstoff den Hauptreaktionsort über den Auslaufstutzen 20.

Am Prallteller 5 erfolgt die Trennung der Flüssigstoffe von den gasförmigen Bestandteilen sowie den zuvor eigeleiteten Gasen, wie Luftsauerstoff,Methan,Kohlendioxid,nicht umgesetztem Ammoniak sowie den nichtgebundenen restlichen gasförmigen Geruchstoffen.

Die gasförmigen Bestandteile gelangen nach dem Passieren eines Flammfilters (Flammenrückschlagsverhinderung) 6 und Zudosierung eines Brennstützgases in Punkt 45, aus Leitung 46, Gasmengeneinstellung 13, Ventil 12 und Brenngasquelle 11, zur verbrennung in Flamme 7.

Die behandelten Flüssigstoffe 19 verlassen im Eigengefälle den Reaktor 17 und werden in einem Behälter zwischengelagert oder direkt über Sprühbehälter oder Leitungen auf das zu düngende Agrarland verbracht.

Sonstige Neben- oder Abfallprodukte fallen nicht an.

Alternativ kann die Verbrennung der gasförmigen Prozessabgase auch katalytisch ohne Flammbildung erfolgen, oder thermokatalytisch an einem entsprechend temperierten Katalyssatorgebilde.

**Beispiel 2**

Verfahrensablauf gemäss Fig. 1

Dieses Beispiel entspricht Beispiel 1, nur ist der Aufbereitungsanlage eine Dickmistaufbereitungsstufe vorgeschaltet. Diese kann bei stationären Anlagen prinzipiell vorgeschaltet werden einen reibungsloseren Verlauf des Hauptverfahrens zu gewährleisten.

Die Vorschaltanlage 50 besteht im Prinzip aus einem Überlaufgefäss 40 und einem Zerkleinerungskolben bzw. Reiber 41 mit Sieb 42. Hierzu sind verschiedene andere, auch insbesondere rotierende Zerkleinerungssysteme anwendbar.

**Beispiel 3**

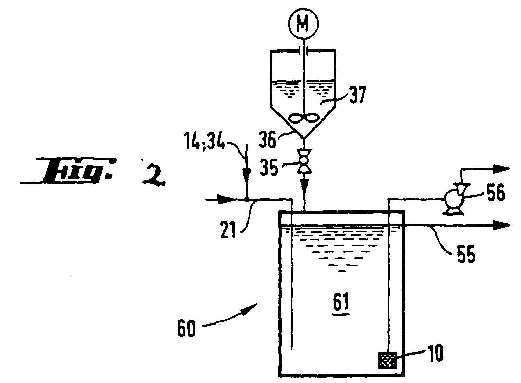

Verfahrensablauf gemäss Fig. 2

Bei diesem Beispiel handelt es sich um eine vereinfachte Verfahrensversion, beziehungsweise um eine in situ-Vorbehandlungsstufe. Die Apparatur 60 der Fig. 2 ist eine sehr einfache Abwandlung der Ammoniakabscheidung aus den Tierexkrementen. Der Kanal mit den Flüssigstoffen mündet in ein Gefäss 61. Vor Eintritt der Flüssigstoffe in Gefäss 61, oder direkt in das Gefäss 61 wird Kohlendioxidhaltige Stallabluft hinzugeblasen 14, 34. Aus Gefäss 36 wird über die Dosierung für die Gipsaufschlämmung 35 die Gipsaufschlämmung 37 in das Gefäss 61 eingetragen. In Gefäss 61 erfolgt nun die $CaCO_3$-Ausfällung und gleichzeitig die Bildung von im Medium löslichem Ammoniumsulfat. Die so behandelten Flüssigstoffe gelangen über die Überlaufleitung in das eigentliche Lagerbecken für die Flüssigstoffe, von woaus diese einer weiteren Aufbereitung gemäss dem Verfahren nach Beispiel 1 unterworfen werden.

Je nach den Strömungsverhältnissen und der Durchmischung in Gefäss 61 werden die Absetzstoffe über die Überlaufleitung 55 mitausgetragen.

Bei Schlammbildung im Gefäss 61, wird dieser mittels Pumpe 56 abgepumpt, zur sofortigen Düngung oder zur Stapelung im Lagertank.

Alternativ wird in Gefäss 61 ein Rührwerk betrieben. In einem solchen Falle fliessen die behandelten Flüssigstoffe vollkommen mit der Überlaufleitung 55 ab.

Positions-Zahlen-Liste

| | |
|---|---|
| 1 | Exzenterschneckenpumpe |
| 2 | Druck-/Mengenregelung |
| 3 | Sicherheitsüberlauf |
| 4 | Mischzylinder |
| 5 | Prallteller |
| 6 | Flammfilter |
| 7 | Lockflamme |
| 8 | Füllstandsanzeige |
| 9 | Stapelbehälter |
| 10 | Selbstreinigendes Filter |
| 11 | Hilfsbrenngas |
| 12 | Ventil |
| 13 | Gasmengeneinstellung |
| 14 | Luft bzw. $O_2$ Zufuhr |
| 15 | Mengenregelung zu 14 |
| 16 | Poröskörper |
| 17 | Reaktor |
| 18 | Zuleitung Luft/Sauerstoff |
| 19 | Ableitung behandelte Flüssigst. |

20  Auslaufstutzen des Mischzylinders
21  Zulauf Rohflüssigstoffe
22  Sauerstoffquelle -Stallabluft
23  Mengeneinstellung zu 22
24  Ventil zu 22
25
26
27
28
29
30
31  Kohlendioxidquelle - Stallabluf
32  Ventil zu 31
33  Mengeneinstellung zu 31
34  Kohlendioxideinleitung
35  Dosierung der Gipsaufschlämmung
36  Mischgefäss für Gipsschlamm
37
38  Ansaugstutzen zu 1
39  Kohlendioxideinleitstutzen
40  Überlaufgefäss
41  Zerkleinerungskolben, Reiber
42  Vorschaltsieb
43
44
45
46
47
48
49
50  Vorschaltanlage-Dickstofftrennanlage
51
52
53
54
55  Überlauf zu 60
56  Schlammpumpe zu 60
57
58
59
60  Vorbehandlungsgipsaufbereit
61  Mischgefäss zu 60
62
63
64
65
66
67
68
69
70
71
72
73
74
75
76
77

EP 0 559 858 B1

78
79
80
81
82
83
84
85
86
87
88
89
90

**Patentansprüche**

1. Verfahren zur Aufbereitung von Tierexkrementen, Gülle und Jauche - Flüssigstoffe gennannt - zum Zwecke der Nutzbarmachung des im Flüssigstoff enthaltenen Ammoniaks als chemisch gebundenes, nichtflüchtiges Pflandüngemittel, sowie der thermischen Entsorgung der chemisch nicht einfach reagiblen, umweltbelästigenden Inhalstoffe der Flüssigstoffe, beziehungsweise aus dem Verfahrensablauf resultierende Reststoffe wie Ammoniakreste, Methangas oder gasförmige Geruchstoffe, indem
   das in den Flüssigstoffen nichtgebundene und/oder gelöste Ammoniak durch Zusatz von Kchlendioxid und Gips zu den Flüssigstoffen in ein nichtflüchtiges, von den Pflanzen gut aufnehmbares Stickstoffdüngemittel überführt wird und die Flüssigstoffe in einem Strippingverfahren, durch Einleiten von Sauerstoff, vorzugsweise in Form von Luft, von den Geruchstoffen, Restammoniak, Methan und sonstigen flüchtigen Stoffen entlastet werden, die bei Austritt aus der Apparatur, thermisch-katalytisch oder mit Hilfe von brennbarem Gas verbrannt werden.

2. Verfahren gemäss Anspruch 1, dadurch gekennzeichnet, das Gips in aufgeschlämmter Form mit einem Feststoffgehalt von zwischen 5 bis 25% als Reaktionsstoff eingesetzt wird.

3. Verfahren gemäss den Ansprüchen 1 und 2, dadurch gekennzeichnet, dass das Zudosieren von aufgeschlämmtem Gips in die Apparatur in den Ansaugstutzen der Exzenterschneckenpumpe (1) erfolgt.

4. Verfahren nach Anspruch 1, dadurch gekennzeichnet, dass im Strippingverfahren als Luft, Stallabluft eingesetzt wird zwecks gleichzeitiger Nutzung der darin enthaltenen Kohlensäure und deren Reinigung.

5. Apparatur zur Durchführung des Verfahrens zur Aufbereitung von Flüssigstoffen, wie Tierexkrementen, Gülle und Jauche, beginnend mit der Entnahme der Flüssigstoffe aus einem Stapelbehälter (9), dem gegebenenfalls eine Dickstofftrennanlage (50) vorgeschaltet ist, über ein selbstreinigendes Filter (10), mittels einer Pumpe (1), die vorzugsweise eine Exzenterschneckenpumpe ist und wobei den aufzubereitenden Flüssigstoffen im Bereich eines Ansaugstutzens der Pumpe (1) Gipsschlamm zudosier bar ist, wodurch in der Pumpe eine intensive Durchmischung der zu reagierenden Gipsaufschlämmung und der aufzubereitenden Flüssigkeit stattfinden kann, wonach die Mischung in einem Zylinder (4) eines Reaktors (17) gelangt, wo über eine Zuleitung (34) dem Reaktionsgemisch Kohlensäure zuführbar ist, sowie gegebenenfalls Sauerstoff in Form von Luft und nach Abschluß der Reaktion die aufbereitete Flüssigkeit über eine Leitung (19) ableitbar ist und flüchtige Abgase über ein Flammfilter (6) und gegebenenfalls eine Lockflamme (7) entweichen können.

6. Apparatur nach Anspruch 5, dadurch gekennzeichnet, dass eine Gipszugabe und eine Kohlensäurezufuhr gleichzeitig in den Mischzylinder (4) erfolgen kann.

7. Apparatur nach Anspruch 5, dadurch gekennzeichnet, dass Flüssigstoffe von Feststoffen trennbar sind durch eine Dickstofftrennanlage (50) als Vorschaltaggregat, beginnend mit einem Zulauf der Rohflüssigstoffe (21) in einen Vorschaltsieb (42)-raum mit einem Reiberkolben (41), der das Sieb stets säubert, und Dickstoffe austrägt, endend mit einem Überlaufgefäss (40) mit einem Auslaufstutzen zur Ableitung dünnflüssiger Flüssigstoffe.

8. Apparatur nach den Ansprüchen 5 und 6, dadurch gekennzeichnet, dass sie als mobile Anlage einsetzbar ist.

10

EP 0 559 858 B1

**Revendications**

1.  Méthode pour le traitement des excréments animaux et du purin - nommés ici matières liquides - afin d'utiliser l'ammoniac contenu dans les matières liquides comme engrais botanique lié et non-volatil et d'éliminer par procédé thermique les constituants non-réactifs et polluants ainsi que les déchets résultants du procédé (restes d'ammoniac, de méthane ou substances odorantes gazeuses), consistant en la transformation de l'ammoniac non-lié et/ou dissout dans les matières liquides par addition de gaz carbonique et de plâtre en un engrais azoté non-volatil qui est bien absorbé par les plantes, et dégageant ainsi des matières liquides par procédé de stripage avec apport d'oxygène - de préférence sous forme d'air - les substances odorantes, les restes d'ammoniac, de méthane et d'autres substances volatiles, lesquelles substances seront détruites dès leur sortie de l'appareillage par réaction thermique-catalytique ou à l'aide de gaz combustible.

2.  Méthode suivant la revendication 1, caractérisée par l'utilisation du plâtre semi-liquide comme agent réactif avec une consistance solide variant entre 5 et 25%.

3.  Méthode suivant les revendications 1 et 2, caractérisée par l'apport de plâtre semi-liquide dans l'appareillage par l'orifice d'aspiration de la pompe à vis excentrique.

4.  Méthode suivant la revendication 1, caractérisée par l'utilisation lors du procédé de stripage de l'air sortant de l'étable, afin d'exploiter et de purifier simultanément l'acide carbonique contenu dans cet air.

5.  Appareillage pour la réalisation du procédé de traitement des matières liquides, comme excréments animaux et purin, commençant par l'introduction des liquides par un récipient empilé (9) précédé le cas échéant d'un séparateur des matières consistantes (50), passant ensuite par un filtre autonettoyant (10) moyennant une pompe (1) - de préférence une pompe à vis excentrique - en permettant l'addition de plâtre semi-liquide par un orifice d'aspiration de la pompe (1), à la suite de quoi un mélange intensif du plâtre semi-liquide et des matières liquides peut avoir lieu dans la pompe, après quoi le mélange parvient dans l'éprouvette (4) d'un réacteur (17) dans lequel de l'acide carbonique est ajouté au mélange réactif par une conduite d'alimentation (34), ainsi qu'éventuellement de l'oxygène sous forme d'air, et enfin après fin de réaction par l'écoulement du liquide préparé par une conduite (19) et l'élimination des gaz d'échappement non-volatils par un filtre à flammes (6), ou le cas échéant par une veilleuse (7).

6.  Appareillage suivant la revendication 5, caractérisé par le fait que l'addition de plâtre et l'alimentation en gaz carbonique peuvent être effectuées simultanément dans l'éprouvette (4).

7.  Appareillage suivant la revendication 5, caractérisé par la séparation des matières liquides et solides moyennant un séparateur de matières consistantes (50) précédant l'appareillage, et commençant par l'introduction des liquides bruts (21) dans une zone de filtrage (42) par un piston de friction (41), qui nettoie constamment le filtre et transporte les matières solides, et finissant par un réservoir de trop-plein (40) muni d'un orifice de décharge pour l'écoulement des fluides.

8.  Appareillage suivant les revendications 5 et 6, caractérisé par l'utilisation de l'appareillage comme installation mobile.

**Claims**

1.  A method for the processing of animal excrements and liquid manure - called liquid materials - for the purpose of utilization of the ammonia contained in the liquid materials as a chemically bound non fugitive plant fertilizer, as well as the Thermal disposal of the chemically resistent, environmentally undesirable ingredients of the liquid materials, respectively of the residues remaining after processing, like ammonia, gaseous methane or gaseous odorous compounds, wherein
the said unbound and/or solubilized ammonia is transformed into a non fugitive, easy resorbable by plants nitrogen containing fertilizer, by adding carbon dioxide and gypsum to the liquid materials and said mate material undergoes a stripping operation by feeding oxygen, preferable in the form of air into the stripper, to free the processed liquid of odorous compounds, remaining non reacted parts of ammonia, methane and anyelse volatile compounds, and said compounds when leaving the precessing apparatus are destroyed thermally-catalytically or with the aid of a fuel gas flame.

11

2. Method of claim 1, wherein said gypsum is used in a suspended form with a solid matter content of 5 to 25%,

3. Method of claim 1 and 2, wherein said gypsum is added into the intake stack of the excentric srew pump (1).

4. Method of claim 1, wherein said used stripping air consists of the animal stable exhaust air, benefiting both, the utilization of carbon dioxide contained in the exhaust air and to clean the exhaust air.

5. Apparatus for carrying out the method for the processing of animal excrements and liquid manure, starting with the supply of material to be processed, off a store container (9), optionally passing a separator (50) to remove thicker ingredients of the liquids and passing a self cleaning filter (10), means pump (1) preferably an excenter screw pump, whereby in the area of a intake stack of the pump (1) the gypsum suspension is feedable to the liquid material to be processed and in the pump already an intensive mixing trough of the contacted materials might happen and said mixture enters into a cylinder (4) of a reactor (17) and means a pipeline (34) carbon dioxide is feedable into the reactor, as well as oxygen, optionally in the form of air and after the reactions ending, the treated liquid material, after passing a pipeline (19), is removable and the volatile exhausts via a flame filter (6) and optionally an safety flame (7) can be released.

6. Apparatus of claim 5, wherein the supply of carbon dioxide and Gypsum into cylinder (4) might follow simultaneously.

7. Apparatus of claim 5, wherein liquid materials are separatable from thicker materials means a separator for thick materials (50) as pretreatment unit, starting with an inflow of the raw liquid materials (21) into a preswitched filter chamber (42) containing a rubbing piston (41), said piston steady cleans the filter and removes the thicker material out of the chamber, ending with a overflow vessel (40) with a outflow stack for the liquid materials.

8. Apparatus of claims 5 and 6, wherein the apparatus is usable as a mobile unit.

**Fig. 1**

*Fig. 2*